Europäisches Patentamt

European Patent Office

Office européen des brevets

(19)

(11) **EP 0 625 019 B1**

(12) **EUROPÄISCHE PATENTSCHRIFT**

(45) Veröffentlichungstag und Bekanntmachung des Hinweises auf die Patenterteilung:
**11.02.1998 Patentblatt 1998/07**

(21) Anmeldenummer: **94900036.8**

(22) Anmeldetag: **02.12.1993**

(51) Int. Cl.$^6$: **A47J 27/08**

(86) Internationale Anmeldenummer:
**PCT/CH93/00271**

(87) Internationale Veröffentlichungsnummer:
**WO 94/13183 (23.06.1994 Gazette 1994/14)**

(54) **KOCHGEFÄSS**

COOKING VESSEL

FAIT-TOUT

(84) Benannte Vertragsstaaten:
**AT BE CH DE DK ES FR GB GR IE IT LI LU MC NL PT SE**

(30) Priorität: **04.12.1992 CH 3730/92**

(43) Veröffentlichungstag der Anmeldung:
**23.11.1994 Patentblatt 1994/47**

(73) Patentinhaber:
**AMC International
Alfa Metalcraft Corporation AG
6343 Rotkreuz (CH)**

(72) Erfinder:
• **VON DER BECKE, Reinhard
CH-8126 Zumikon (CH)**
• **BECK, Hans-Jürgen
CH-6340 Baar (CH)**

(74) Vertreter: **Schick, Carl et al
Isler & Pedrazzini AG
Patentanwälte
Postfach 6940
8023 Zürich (CH)**

(56) Entgegenhaltungen:
**DE-A- 4 017 067          FR-A- 1 142 648
GB-A-   904 110**

Anmerkung:    Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Kochgefäss gemäss dem Oberbegriff des Patentanspruchs 1.

Ein derartiges Kochgefäss ist aus der DE-A-40 17 067 bekannt. Bei diesem Kochgefäss ist ein auf einem Formkörper gelagertes Verschlussglied als Hohlkörper mit parallel zur Richtung der Schwenkachse verlaufender zylindrischer oder prismatischer Wandung ausgebildet, die mit relativ wenig Kraft aus einer Öffnungsstellung in eine Verriegelungsstellung schwenkbar ist.

Aus der GB-A-904,110 ist eine Abdeckung für einen Behälter bekannt, die aus einem Oberdeckel und einem Innendeckel besteht, wobei der Behälter einen flanschförmigen umlaufenden Behälterrand und der Deckel ein oder zwei einzelne hakenförmige Verschlusselemente aufweist, die am Rand des Innendeckels schwenkbar angeordnet sind und zum Schliessen des Behälters dienen. Die Randpartie des Oberdeckels ist mit einem Mechanismus verbunden, der eine Schwenkung des Verschlusselementes bewirkt. Die Verschlusselemente weisen einen hakenförmigen Teil auf und sind derart am Aussenrand des Innendeckels gelagert, dass sie in der Schwenkposition, die dem geschlossenen Zustand entspricht, mit den Enden des hakenförmigen Teils aussenseitig gegen den Behälterrand drücken und dass in der Schwenkposition, die dem offenen Zustand entspricht, sich die Enden des hakenförmigen Teils in einem Abstand vom Behälterrand befinden, um den Oberdeckel abheben zu können. Der aus der GB-A-904 110 bekannte Mechanismus ist jedoch zu aufwendig, um ihn für ein Kochgefäss zu verwenden. Die Aufgabe der Erfindung besteht nun darin, ein Kochgefäss der in DE-A-40 17 067 angegebenen Gattung zu schaffen, das besonders leicht zu bedienen ist.

Diese Aufgabe wird erfindungsgemäss durch ein Kochgefäss mit den im Patentanspruch 1 angegebenen Merkmalen gelöst. Weitere Ausgestaltungen der Erfindung betreffen einen Deckel eines Kochgefässes und ein Verschlusselement für einen solchen Deckel.

Im folgenden wird die Erfindung beispielweise anhand einer Zeichnung näher erläutert. Es zeigen:

Fig. 1 eine schematische Teildarstellung im Schnitt längs einer Symmetrieachse einer Ausführung eines Kochgefässes nach der Erfindung mit einem Verschlusselement in offener Stellung,

Fig. 2 eine schematische Teildarstellung dieser Ausführung mit dem Verschlusselement in geschlossener Stellung,

Fig. 3 eine schematische Teildarstellung dieser Ausführung längs einer senkrecht zur Symmetrieachse verlaufenden Ebene,

Fig. 4 eine schematische Darstellung eines Details eines Bajonettverschlusses für den Aussendeckel eines solchen Kochgefässes,

Fig. 5 eine schematische Darstellung von oben eines Verschlusselementes des erfindungsgemässen Kochgefässes im montierten Zustand,

Fig. 6 eine schematische Darstellung eines sich im Bereich einer Zunge des Innendeckelrandes befindenden Verschlusselementes,

Fig. 7 eine Detaildarstellung mit einer Seitenansicht eines Verschlusselementes,

Fig. 8 eine schematische Teildarstellung im Schnitt längs einer Symmetrieachse einer zweiten Ausführung eines Kochgefässes nach der Erfindung mit einem Verschlusselement in offener Stellung,

Fig. 9 eine schematische Teildarstellung dieser Ausführung mit dem Verschlusselement in geschlossener Stellung,

Fig. 10 eine schematische Teildarstellung dieser Ausführung längs einer senkrecht zur Symmetrieachse verlaufenden Ebene,

Fig. 11 eine Seitenansicht einer weiteren Ausführung eines Verschlusselementes mit einer Schulter und einer Einbuchtung,

Fig. 12 eine Draufsicht des Verschlusselementes nach Fig. 11, dessen Lagerungskopf mit zwei scheibenförmigen axial angeordneten Erweiterungen versehen ist,

Fig. 13 eine schematische Teildarstellung einer Ausführung mit einem Verschlusselement nach Fig. 11 in offener Stellung,

Fig. 14 eine schematische Teildarstellung einer Ausführung mit einem Verschlusselement nach Fig. 11 in geschlossener Stellung,

Fig. 15 eine Detaildarstellung eines Lagerungsteils mit abgewinkelten, eine runde Aussparung aufweisenden Lappen zur seitlichen Halterung einer solchen scheibenförmigen Erweiterung des Verschlusselementes nach Fig. 12, und

Fig. 16 eine Teildarstellung einer Ausführung eines Deckelrandes, bei dem die Feder mit Hilfe von Bolzen gespannt ist.

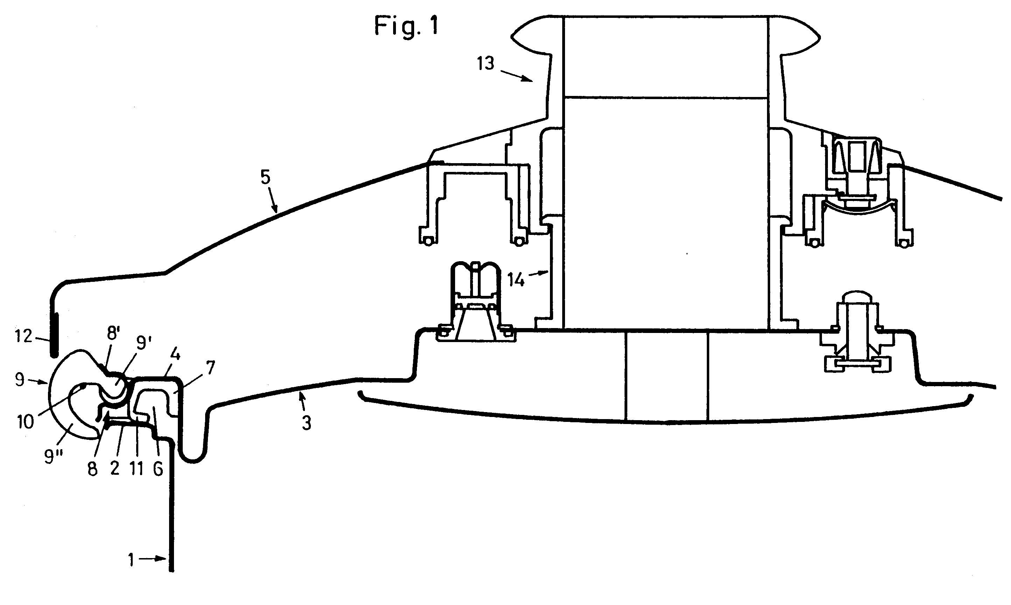

Das in Fig. 1 dargestellte Kochgefäss weist einen Behälter 1 mit einem abgewinkelten umlaufenden Behälterrand 2, einen Innendeckel 3 mit einem Innendeckelrand 4 und einen Oberdeckel 5 auf. Der Innendeckel 3 zusammen mit dem Oberdeckel 5, der auch Aussendeckel genannt wird, bildet den eigentlichen Deckel. Der Innendeckelrand 4 ist kanalförmig abgewinkelt, um einen Kanal 6 zur Aufnahme einer Vorzugsweise C-förmigen Dichtung 7 zu bilden. Die äussere Umrandung des Kanals 6 ist seitlich und unten nach aussen abgerundet, um eine untere Lagerung 8 für je ein Verschlusselement 9 (Fig. 1), zu bilden. Am Innendeckelrand 4 sind jeweils durch je zwei parallele Einschnitte am äusseren Innendeckelrand Zungen 8' ausgebildet, die nach oben umgebogen sind, um den oberen Teil der Lagerung für die einzelnen Verschlusselemente 9 zu bilden. Solche Verschlusselemente sind rund um den Innendeckelrand 4 verteilt. Ein Verschlusselement 9 dieser Art besteht aus einem Lagerungskopf 9' und einem Hakenteil 9''. Die Verschlusselemente sind daher schwenkbar am Innendeckel 3 angeordnet. Die Verschlusselemente werden immer durch eine umlaufende Feder 10 von unten nach oben gegen den Oberdeckel 5 hin gedrückt. Der Oberdeckel 5 lässt sich jedoch vom Innendeckel 3 abheben.

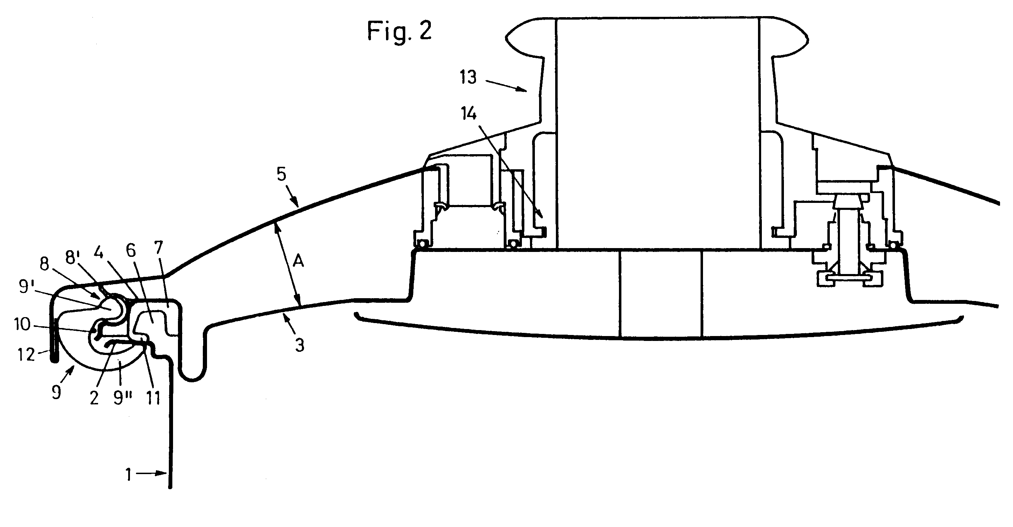

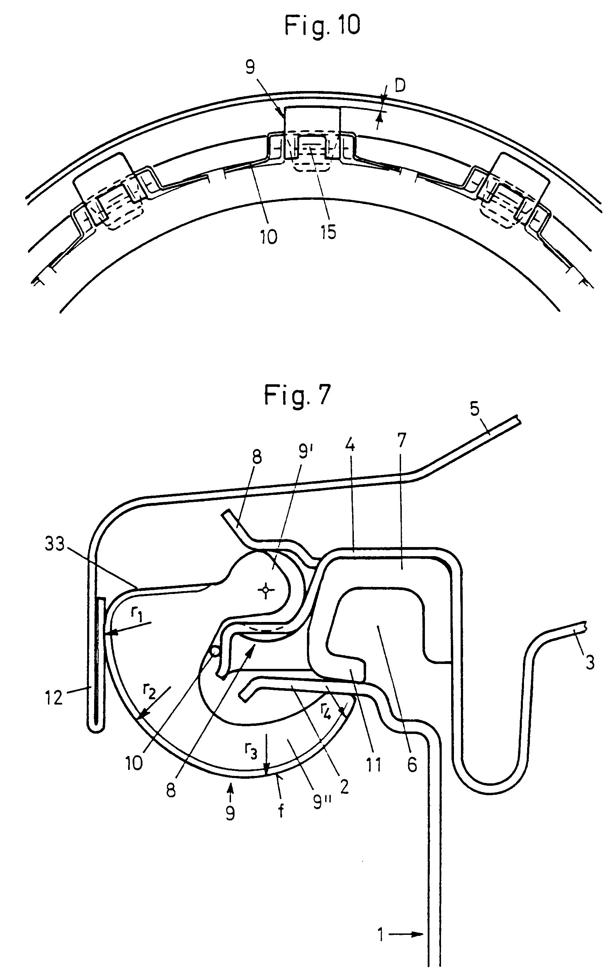

Fig. 2 zeigt den Deckel in geschlossener Stellung. Das Verschlusselement 9 ist derart unterhalb des Behälterrandes geklappt, dass das Ende des Hakenteils 9'' (Fig. 7) ihn von unten gegen eine Lippe 11 der Dichtung 7 drückt. Der mittlere Abstand A zwischen Innendeckel 3 und Aussendeckel 5 ist in dieser geschlossenen Deckelposition am kleinsten. Der äussere Rand 12 des Aussendeckels 5 ist in Fig. 2 beispielsweise als eine koaxial mit der Symmetrieachse des Behälters verlaufende Zylinderfläche ausgestaltet. Im allgemeinen kann diese Fläche auch kegelförmig ausgebildet sein.

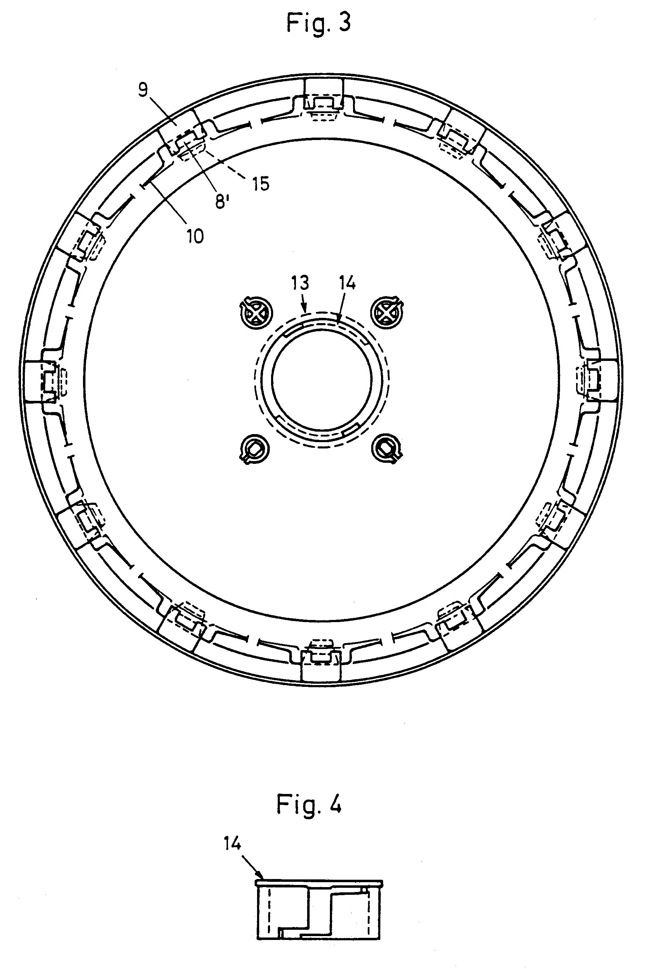

Aus den Figuren 1 bis 3 ist ersichtlich, dass der Aussendeckel 5 einen Deckelknopf 13 aufweisen kann, der durch einen Bajonettverschluss 14 (Fig. 4) im Zentrum verriegelbar ist. Im Beispiel nach Fig. 3 sind zwölf Verschlusselemente, wie das Verschlusselement 9, in gleichen Abständen am Rande des Innendeckels 3 angeordnet. Vorzugsweise können zwischen zehn und zwanzig Verschlusselemente montiert werden. Die Verschlusselemente werden durch die Feder 10 nach oben gedrückt. Fig. 4 zeigt ein Detail des Bajonettverschlusses 14.

Aus den Figuren 3, 5 und 6 ist ersichtlich, dass die Verschlusselemente 9 im Bereich der Drehachse eine Vertiefung 15 aufweisen, deren Breite etwas grösser als die Breite der Zungen 8' ist, so dass jedes Verschlusselement 9 durch eine solche Zunge 8' eingeklemmt bleibt.

Das Verschlusselement 9 ist in einem Querschnitt senkrecht zu seiner Drehachse angenähert C-förmig, jedoch mit einer erweiterten Wanddicke im oberen linken Bereich ausgestaltet. Die äussere Umgrenzung des Verschlusselementes nach unten ist eine Kurve f, die bei Polarkoordinaten durch die Gleichung $f = F(r,w)$ ausgedrückt werden kann, worin r der Abstand eines Punktes der Kurve f von der theoretischen Drehachse und w der Winkel ist, den die Abstandsgerade r mit der horizontalen x-Achse einschliesst. Im Beispiel nach Fig. 2 mit dem Verschlusselement in geschlossener Position sollten die Werte von $r_1$ für $w_1 \approx 190°$, $r_2$ für $w_2 = 225°$, $r_3$ für $w_3 = 270°$ und $r_4$ für $w_4 \approx 300°$ so gewählt werden, dass $r_1 < r_2$ und vorzugsweise $r_3 \approx r_2$ und $r_4 < r_1$ gilt (Fig. 7).

Das Kochgefäss mit den Verschlusselementen nach den Figuren 1 und 2 funktioniert folgendermassen:

Bei Druckaufbau des Kochgefässes in geschlossener Stellung werden die Verschlusselemente 9 um ihre Drehachse nach oben gedrückt, da aber der Aussendeckel 5 fest mit dem Innendeckel 3 (Fig. 2) verriegelt ist, wird durch Formschluss ein Öffnen des Kochgefässes verhindert. Der Formschluss, der die Gegenkraft durch den Aussendeckel 5 gewährleistet, ergibt sich bei der Ausführung nach Fig. 1 oder 2 dadurch, dass die Verschlusselemente 9 durch den abgewinkelten Rand des Aussendeckels 5 an der Schwenkbewegung gehindert werden.

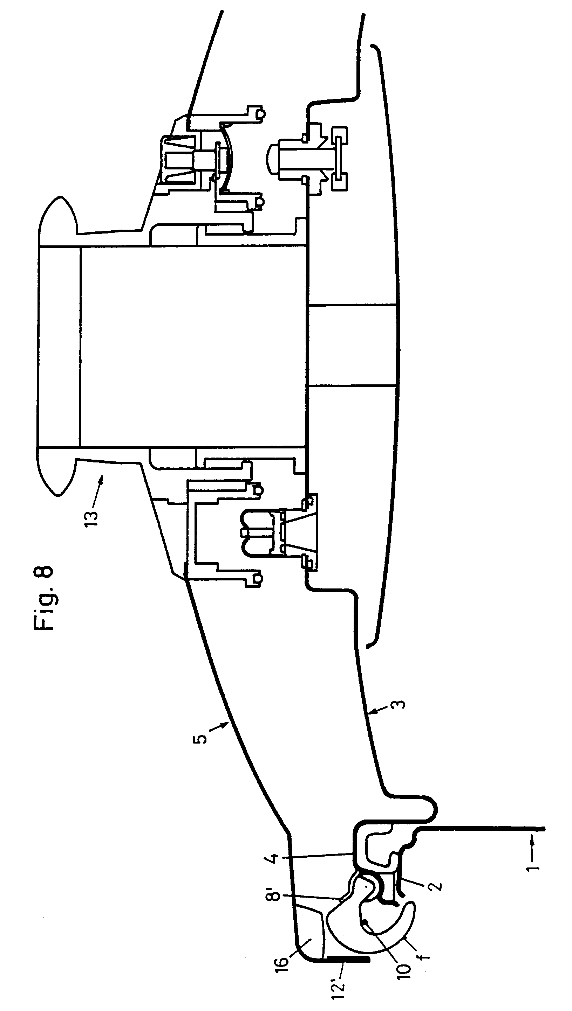

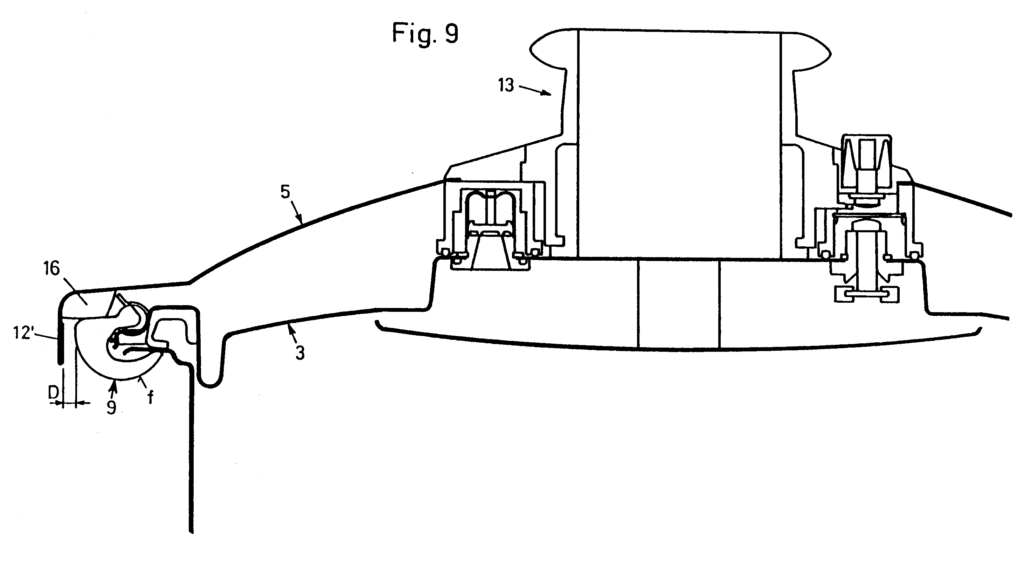

Bei der Ausführung nach Fig. 8 oder 9 werden die Verschlusselemente 9 durch einen Anschlag 16 an einer Schwenkbewegung nach oben gehindert, so dass zwischen dem Aussendeckelrand 12' und dem verschlusselement 9 im geschlossenen Zustand ein Luftspalt der Breite D vorhanden sein kann.

In beiden Fällen übt der Aussendeckel die Gegenkraft aus, die die Verschlusselemente 9 in Position halten. Bei der Ausführung nach den Figuren 1 und 2 muss die oben erwähnte Bedingung ($r_1 < r_2$) bezüglich der Abstände oder Radien $r_1$ und $r_2$ erfüllt werden, wie es sich aus dem Vergleich der Figuren 1 und 2 ergibt. Bei der Ausführung nach den Figuren 8 und 9 kann die Kurve f beispielsweise auch ein Halbkreis sein.

Zum Öffnen des Kochgefässes wird nach dem Druckabbau das zentrale Verriegelungssystem durch Drehen in die Anfangsposition bewegt und der Aussendeckel 5 am Drehknopf 13 ca. 20 bis 30 mm angehoben. Durch das Eigengewicht des Innendeckels 3 bleibt dieser auf dem Kochgefäss liegen. Die umlaufende Feder 10 unterhalb der Verschlusselemente 9 drückt diese nach oben gegen das Ende der Zungen 8', das jeweils als Anschlag dient. Durch die Schwenkbewegung der Verschlusselemente wird der Formschluss mit dem Kochgefäss aufgehoben, und der Deckel kann abgenommen werden.

Zum Schliessen des Kochgefässes werden die Verschlusselemente 9 durch den Aussendeckel 5 bzw. durch die Anschläge 16 unter den Behälterrand 2 geschwenkt. Anschliessend wird der Deckelknopf 13 gedreht, und das zentrale Verriegelungssystem verschliesst den Aussendeckel 5 mit dem Innendeckel 3.

Um eine vollständige Reinigung des Deckels sicherzustellen, kann der Aussendeckel 5 vom Innendeckel 3 entfernt werden. Dazu wird der Deckelknopf 13 in die entsprechende Position gedreht, bei der der Bajonettverschluss 14 der zentralen Verriegelung geöffnet.

ist. Dadurch, dass es keine festen Verbindungselemente zwischen Innen- und Aussendeckel gibt, wird eine vollständige Reinigung beider Teile erleichtert.

Da die Verschlusselemente 9 unter den Behälterrand 2 greifen, wird das Biegemoment auf den abgewinkelten Rand 2 des Behälters minimiert.

Das Verschliessen des Deckels benötigt nur äusserst geringe Kraft. Bei richtiger Auslegung der Feder 10 zum Hochklappen der Verschlusselemente 9 genügt bereits das Eigengewicht des Aussendeckels 5 zum Verschliessen dieser Elemente. Wird das Hochschwenken der Verschlusselemente 9 durch den äusseren abgewinkelten Rand 12 des Aussendeckels 5 Vorgenommen, so ist eine zusätzliche Verriegelung eigentlich nicht notwendig. Bei optimaler Formgebung der Verschlusselemente ist in dieser Ausführung ein selbständiges Öffnen nicht mehr möglich. Das zusätzliche Verriegeln über den zentralen Drehknopf 13 soll dem Bediener ein Sicherheitsgefühl vermitteln.

Aus den Figuren 3 und 7 ist ersichtlich, dass, da die Drehachsen der Verschlusselemente 9 tangential am Behälterrand verlaufen, die Länge der Verschlusselemente 9 vorzugsweise nur wenig grösser als der oben definierte Radius r ist. Zudem können die hakenförmigen Enden 9" (Fig. 7) der Verschlusselemente bzw. die Enden der Hakenteile oder Hakenpartien 9" (Fig. 7) vorzugsweise etwas schmaler, beispielsweise konisch oder etwas zugespitzt ausgestaltet sein, um den runden Behälterrand 2 besser zu untergreifen.

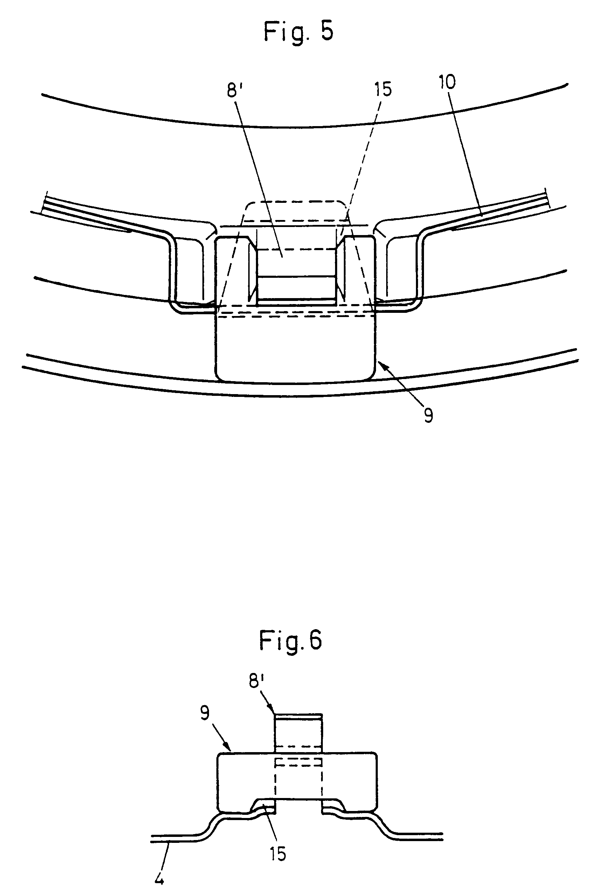

Wie beispielsweise Fig. 5 deutlich zeigt, sind die Verschlusselemente nicht genau zylindrisch. Insbesondere können sie einen Aussenradius, der dem Innenradius des Deckelrandes 12 (Fig. 2) entspricht, und einen Innenradius des Hakenteils 9" haben, der dem Aussenradius des Angriffsrandes vom Topf entspricht.

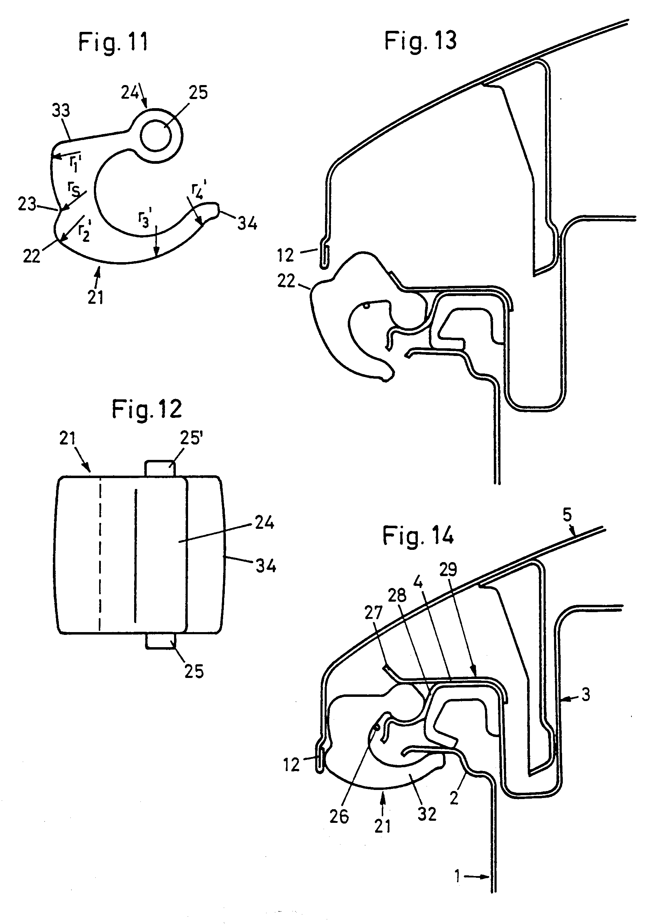

Beim Verschlusselement 21 nach Fig. 11 und 12, das in einer der geschlossenen Position entsprechenden Lage dargestellt ist, sind die Werte von $r_1'$ für $w_1 \approx 190°$, $r_s$ für $w_s \approx 215° +/- 10°$, $r_2'$ für $w_2 \approx 225°$, $r_3'$ für $w_3 = 270°$ und $r_4'$ für $w_4 \approx 300°$, so gewählt worden, dass $r_1' < r_2'$, $r_3' < r_2'$ und $r_s < r_2'$ ist.

Das Verschlusselement 21 weist somit eine Schulter 22 im Endbereich des Radius $r_2'$ und eine Einbuchtung 23 im Endbereich des Radius $r_s$ auf.

Der Lagerungskopf 24 des Verschlusselementes 21 nach Fig. 11 und 12 kann zwei noppenartige oder scheibenförmige oder zylindrische Erweiterungen 25, 25' aufweisen, um die Lagerung zu erleichtern.

Fig. 13 zeigt das Verschlusselement in geöffneter Position, bei der der Deckelrand 12 gegen die Schulter 22 drücken kann.

Fig. 14 zeigt das Verschlussalement in geschlossener Position mit zwei tangentialen Berührungspunkten zwischen dem Verschlusselement und dem Deckelrand 12. In diesem Fall ist die Feder 26 nach unten gedrückt. Die Zunge 27, die der Zunge 8' nach Fig. 7 entspricht, befindet sich in einem selbständigen mit der, unteren Lagerung 28 verbundenen Teil 29.

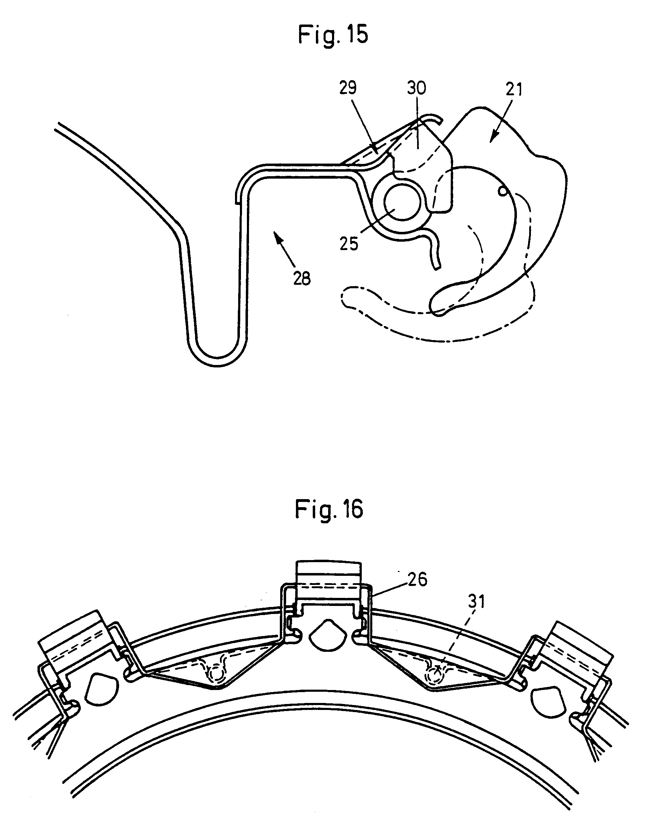

Fig. 15 zeigt, dass dieser selbständige Teil 29 einen um 90° seitlich umgebogenen Lappen 30 aufweisen kann, der mit einer runden Aussparung in einem Kreisbogen von vorzugsweise etwa 90° versehen ist, um die Erweiterung 25 radial zu stützen. Auf der anderen Seite des Teils 29 kann ebenfalls ein derartiger Lappen vorhanden sein.

Fig. 16 zeigt, dass die Feder 26 mit Hilfe von Bolzen 31 in gespannter Lage gehalten werden kann.

## Patentansprüche

1. Kochgefäss mit einem Behälter (1) und einem aus einem Innendeckelteil (3) und einem Oberdeckelteil (5) bestehenden Deckel, wobei der Behälter (1) einen abgewinkelten umlaufenden Behälterrand (2) und der Deckel mindestens drei einzelne peripherisch am Rand (4) des Innendeckelteils (3) schwenkbar angeordnete und zum Schliessen des Kochgefässes dienende Verschlusselemente (9) aufweist, die jeweils eine als ein hakenförmiger Teil (9") ausgebildete Verriegelungspartie aufweisen, wobei die Randpartie des Oberdeckelteils (5) ausgestaltet ist, um durch Drücken des Oberdeckelteils (5) gegen die Verschlusselemente (9) eine Schwenkung derselben bewirken zu können, wobei die Verschlusselemente (9) derart am Aussenrand (4) des Innendekkelteils (3) gelagert sind, dass sie in der Schwenkposition, die dem geschlossenen Zustand entspricht, jeweils mit dem Ende der Verriegelungspartie (9") aussenseitig gegen den Behälterrand (2) drücken und dass in der Schwenkposition, die dem offenen Zustand entspricht, sich die Enden der Verriegelungspartien in einem Abstand (d) vom Behälterrand (2) befinden, um ein ungestörtes Abheben des Innendeckelteils (3) vom Behälter (1) zu ermöglichen, dadurch gekennzeichnet, dass mindestens eine Feder (10) vorhanden ist, die die Verschlusselemente (9) von unten nach oben gegen den Oberdeckelteil (5) hin drückt.

2. Deckel bestehend aus einem Innendeckelteil (3) und einem Oberdeckelteil (5), für den Behälter (1) eines Kochgefässes mit einem abgewinkelten umlaufenden Behälterrand (2), wobei der Deckel mindestens drei einzelne peripherisch am Rand (4) des Innendeckelteils (3) schwenkbar angeordnete und zum Schliessen des Kochgefässes dienende Verschlusselemente (9) aufweist, die jeweils eine als ein hakenförmiger Teil (9") ausgebildete Verriegelungspartie aufweisen, wobei die Randpartie des Oberdeckelteils (5) ausgestaltet ist, um durch Drücken des Oberdeckelteils (5) gegen die Verschlusselemente (9) eine Schwenkung derselben bewirken zu können, wobei die Verschlusselemente (9) derart am Aussenrand (4) des Innendekkelteils (3) gelagert sind, dass sie in der Schwenkposition, die dem geschlossenen Zustand entspricht, jeweils mit dem Ende der Verriegelungspartie (9") aussenseitig gegen den Behälterrand (2) drücken und dass in der Schwenkposition, die dem offenen Zustand entspricht, sich die Enden der Verriegelungspartien in einem Abstand (d) vom Behälterrand (2) befinden, um ein ungestörtes Abheben des Innendeckelteils (3) vom Behälter (1) zu ermöglichen, dadurch gekennzeichnet, dass mindestens eine Feder (10) vorhanden ist, die die Verschlusselemente (9) von unten nach oben gegen den Oberdeckelteil (5) hin drückt.

3. Deckel nach Anspruch 2, dadurch gekennzeichnet, dass der äussere Rand (4) des Innendeckelteils (3) nach oben umgebogene Zungen (8') aufweist, die den oberen Teil einer Lagerung für die einzelnen Verschlusselemente (9) bilden.

4. Deckel nach Anspruch 2 oder 3, dadurch gekennzeichnet, dass der Oberdeckelteil (5) innenseitig am Rand mit einem umlaufenden Anschlag (16) für die Verschlusselemente (9) und/oder mit einem zentralen Verriegelungssystem (14) versehen ist, das ihn mit dem Innendeckelteil (3) lösbar verbindet.

5. Deckel nach einem der Ansprüche 2 bis 4, dadurch gekennzeichnet, dass jedes Verschlusselement (9) mit einem Lagerungskopf (9') und einem zumindest angenähert C-förmigen Hakenteil (9") ausgestaltet ist, wobei vorzugsweise der Lagerungskopf der Verschlusselemente zur Erleichterung der Schwenkbewegung noppenartige Erweiterungen (25, 25') aufweist, und wobei die Lagerung der einzelnen Verschlusselemente einen unteren Teil (28) umfasst, der mit einem seitlich umgebogenen eine runde Aussparung aufweisenden Lappen (30) verbunden ist, um jeweils eine dieser Erweiterungen (25, 25) radial zu stützen.

6. Deckel nach einem der Ansprüche 3 bis 5, dadurch gekennzeichnet, dass das Verschlusselement (9) im Bereich der Drehachse eine Vertiefung (15) aufweist, deren Breite etwas grösser als die Breite der Zungen (8') ist, so dass das Verschlusselement (9) durch eine solche Zunge (8') eingeklemmt bleiben kann.

7. Deckel nach einem der Ansprüche 3 bis 6, dadurch gekennzeichnet, dass mehrere Verschlusselemente (9) rund um den Innendeckelrand (4) verteilt sind, und dass die durch die C-förmigen Öffnungen der Hakenteile (9") umlaufende Feder (10) die Verschlusselemente von unten nach oben gegen ein jeweils als Anschlag dienendes Ende der Zungen (8') hin drückt.

8. Verschlusselement für einen Deckel nach einem der Ansprüche 2 bis 7, mit einem Lagerungskopf (9') und einem hakenförmigen Verriegelungsteil (9"), dadurch gekennzeichnet, dass es aussenseitig eine flache Partie (33) aufweist, die sich bis zum Lagerungskopf (9') erstreckt, und dass es aussenseitig im Bereich zwischen dieser flachen Partie (33) und dem Ende des hakenförmigen Verriegelungsteils (9") eine herausragende Schulter (22) aufweist.

9. Verschlusselement nach Anspruch 8, dadurch gekennzeichnet, dass es im Bereich zwischen dieser flachen Partie (33) und dem Ende (34) des hakenförmigen Teils (9") einstückig ausgebildet ist.

**Claims**

1. Cooking vessel having a container (1) and a lid comprising an inner lid part (3) and an upper lid part (5), wherein the container (1) comprises a bent peripheral container rim (2) and the lid comprises at least three single lock elements (9) peripherally arranged around the rim (4) of the inner lid part (3), which are swivellingly disposed, which serve for locking the cooking vessel and whereby each comprises a hook-shaped part (9") serving as locking part, whereby the rim area of the upper lid part (5) is shaped to produce a swivel movement of the lock elements (9) by pushing the upper lid part (5) against them, whereby the lock elements (9) are arranged at the outer rim (4) of the inner lid part (3) in such a way that said lock elements in the swivel position corresponding to the closed state, press with the end of the hook-shaped locking part (9") from the outside against the container rim (2), and that in the swivel position corresponding to the opened state, the ends of the hook-shaped locking parts are at a distance (d) from the container rim (2) such that an unhindered lifting of the inner lid part (3) from the container (1) is possible, characterized in that at least one spring (10) is provided which presses the lock elements (9) from below upwards against the upper lid part (5).

2. Lid for the container (1) of a cooking vessel comprising an inner lid part (3) and an upper lid part (5), wherein the container (1) comprises a bent peripheral container rim (2) and the lid comprises at least three single lock elements (9) peripherally arranged around the rim (4) of the inner lid part (3), which are swivellingly disposed, which serve for locking the cooking vessel and whereby each comprises a hook-shaped part (9") serving as locking part, whereby the rim area of the upper lid part (5) is shaped to produce a swivel movement of the lock elements (9) by pushing the upper lid part (5) against them, whereby the lock elements (9) are arranged at the outer rim (4) of the inner lid part (3) in such a way that said lock elements in the swivel position corresponding to the closed state, press with the end of the hook-shaped locking part (9") from the outside against the container rim (2), and that in the swivel position corresponding to the opened state, the ends of the hook-shaped locking parts are at a distance (d) from the container rim (2) such that an unhindered lifting of the inner lid part (3) from the container (1) is possible, characterized in that at least one spring (10) is provided which presses the lock elements (9) from below upwards against the upper lid part (5).

3. Lid according to claim 2, characterized in that the outer rim (4) of the inner lid part (3) comprises upward bent tongues (8') forming the upper part of a bearing for the individual lock elements (9).

4. Lid according to claim 2 or 3, characterized in that the outer lid part (5) at the inside at its rim is provided with a peripheral stop (16) for the lock elements (9) and/or with a central locking system (14) which connects releasably the said outer lid part with the inner lid part (3).

5. Lid according to one of claims 2 to 4, characterized in that each lock element (9) is provided with a bearing head (9') and an at least approximately C-shaped hook-part (9"), whereby the bearing head (9') of the lock elements comprises burl-like extensions (25, 25') to improve the swivelling movement and whereby the different lock elements comprise a lower part (28) connected with a lobe (30) bent to one side and comprising a round gap to radially support one of the said extensions (25, 25').

6. Lid according to one of claims 3 to 5, characterized in that the lock element (9) comprises a depression (15) near its axe having a width which is a little larger than the width of the tongues (8') so that the lock element (9) is clamped by one such tongue (8').

7. Lid according to one of claims 3 to 6, characterized in that a couple of lock elements (9) are distributed around the rim of the inner lid part (4) and in that the spring (10) extending though the C-shaped openings of the hook-shaped parts (9") presses the lock elements from below upwards against a end of the tongues (8') serving as stop.

8. Locking element for a lid according to one of claims 2 to 7, with a bearing head (9') and a hook-shaped lock element (9") characterized in that said locking element comprises at the outside a flat part (33) extending to the bearing head (9') and in that said locking element further comprises a projecting shoulder (22) in the area between the flat part (33) and the end of the hook-shaped locking part (9").

9. Locking element according to claim 8, characterized in that the said locking element is formed in one piece in the area between the flat part (33) and the end (34) of the hook-shaped locking part (9").

**Revendications**

1. Ustensile de cuisine comportant un récipient (1) et un couvercle constitué par une partie intérieure (3) et une partie supérieure (5), et dans lequel le récipient (1) possède un bord circonférentiel recourbé (2) et le couvercle comporte au moins trois éléments de fermeture individuels (9) disposés périphériquement de manière à pouvoir pivoter sur le bord (4) de la partie intérieure (3) du couvercle et servant à fermer l'ustensile de cuisine et qui comportent chacun une partie de verrouillage réalisée sous la forme d'une partie en forme de crochet (9"), et dans lequel l'élément de bord de la partie supérieure (5) du couvercle est agencé de manière à pouvoir, sous l'effet de la compression de la partie supérieure (5) du couvercle contre les éléments de fermeture (9), provoquer un basculement de ces derniers, et dans lequel les éléments de fermeture (9) sont montés sur le bord extérieur (4) de la partie intérieure (3) du couvercle de telle sorte que, lorsqu'ils sont dans la position basculée qui correspond à l'état fermé, ils appliquent sur le côté extérieur une compression sur le bord (2) du récipient, respectivement au moyen de l'extrémité de la partie de verrouillage (9") et que dans la position basculée, qui correspond à l'état ouvert, les extrémités des parties de verrouillage sont situées à une distance (d) du bord (2) du récipient de manière à permettre un libre écartement de la partie intérieure (3) du couvercle à partir du récipient (1), caractérisé en ce qu'il est prévu au moins un ressort (10), qui repousse les éléments de fermeture (9) de bas en haut en direction de la partie supérieure (5) du couvercle.

2. Couvercle constitué d'une partie intérieure (3) et d'une partie supérieure (5), pour le récipient (1) d'un ustensile de cuisson comportant un bord circonférentiel recourbé (2), et dans lequel le couvercle comporte au moins trois éléments de fermeture individuels (9) disposés périphériquement de manière à pouvoir pivoter sur le bord (4) de la partie intérieure (3) du couvercle et servant à fermer l'ustensile de cuisine et qui comportent chacun une partie de verrouillage réalisée sous la forme d'une partie en forme de crochet (9"), et dans lequel l'élément de bord de la partie supérieure (5) du couvercle est agencé de manière à pouvoir, sous l'effet de la compression de la partie supérieure (5) du couvercle contre les éléments de fermeture (9), provoquer un basculement de ces derniers, et dans lequel les éléments de fermeture (9) sont montés sur le bord extérieur (4) de la partie intérieure (3) du couvercle de telle sorte que, lorsqu'ils sont dans la position basculée qui correspond à l'état fermé, ils appliquent sur le côté extérieur une compression sur le bord (2) du récipient, respectivement au moyen de l'extrémité de la partie de verrouillage (9") et que dans la position basculée, qui correspond à l'état ouvert, les extrémités des parties de verrouillage sont situées à une distance (d) du bord (2) du récipient de manière à permettre un libre écartement de la partie intérieure (3) du couvercle à partir du récipient (1), caractérisé en ce qu'il est prévu au moins un ressort (10) qui repousse de bas en haut les éléments de fermeture (9) en direction de la partie supérieure (5) du couvercle.

3. Couvercle selon la revendication 2, caractérisé en ce que le bord extérieur (4) de la partie intérieure (3) du couvercle possède des languettes (8') recourbées vers le haut et qui forment la partie supérieure d'un support pour les différents éléments de fermeture (9).

4. Couvercle selon la revendication 2 ou 3, caractérisé en ce que la partie supérieure (5) du couvercle comporte intérieurement au niveau du bord une butée circonférentielle (16) pour les éléments de fermeture (9) et/ou un système central de verrouillage (14) qui relie la partie supérieure du couvercle de façon amovible à la partie intérieure (3) du couvercle.

5. Couvercle selon, l'une des revendications 2 à 4, caractérisé en ce que chaque élément de fermeture (9) est agencé avec une tête de support (9') et une partie formant crochet (9") au moins approximativement en forme de C, et que de préférence la tête de support des éléments de fermeture comporte, pour faciliter le mouvement de fermeture, des élargissements en forme de boutons (25, 25'), et le support des différents éléments de fermeture comprend une partie inférieure (28), qui est reliée à une patte (30) qui est recourbée latéralement et possède un évidement arrondi, afin de supporter radialement respectivement l'un de ces élargissements (25, 25').

6. Couvercle selon l'une des revendications 3 à 5, caractérisé en ce que l'élément de fermeture (9) possède, dans la zone de l'axe de rotation, un renfoncement (15), dont la largeur est légèrement supérieure à la largeur des languettes (8'), de sorte que l'élément de fermeture (9) peut rester serré par une telle languette (8').

7. Couvercle selon l'une des revendications 3 à 6, caractérisé en ce que plusieurs éléments de fermeture (9) sont répartis circonférentiellement autour du bord intérieur (4) du couvercle et que le ressort (10), qui s'étend circonférentiellement à travers les ouvertures en forme de C des parties en forme de crochet (9"), repousse les éléments de fermeture de bas en haut contre une extrémité, utilisée respectivement comme butée, des languettes (8').

8. Elément de fermeture pour un couvercle selon l'une des revendications 2 à 7, comportant une tête de support (9') et une partie de verrouillage en forme de crochet (9"), caractérisé en ce qu'il comporte sur sa face extérieure une partie plate (33), qui s'étend jusqu'à la tête de support (9'), et qu'il possède sur sa face extérieure, dans la zone située entre cette partie plate (33) et l'extrémité de la partie de verrouillage en forme de crochet (9"), un épaulement saillant (22).

9. Elément de fermeture selon la revendication 8, caractérisé en ce qu'il est réalisé d'un seul tenant dans la zone située entre cette partie plate (33) et l'extrémité (34) de la partie en forme de crochet (9").

Fig. 1

EP 0 625 019 B1

Fig. 2

## Fig. 3

## Fig. 4

Fig. 5

8'    15    10

9

Fig. 6

8'

9

15

4

Fig. 10

Fig. 7

Fig. 8

Fig. 9

## Fig. 11

## Fig. 13

## Fig. 12

## Fig. 14

Fig. 15

Fig. 16